(19)

Europäisches
Patentamt
European
Patent Office
Office européen
des brevets

(11) **EP 2 104 081 A1**

(12) **EUROPEAN PATENT APPLICATION**

(43) Date of publication:
23.09.2009 Bulletin 2009/39

(51) Int Cl.:
*G08G 1/01* (2006.01)     *G08G 1/0967* (2006.01)
*G01C 21/34* (2006.01)     *G09B 29/10* (2006.01)

(21) Application number: 08005151.9

(22) Date of filing: 19.03.2008

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Harman Becker Automotive Systems
GmbH
76307 Karlsbad (DE)**

(72) Inventors:
• **Pryakhin, Alexey
80689 München (DE)**
• **Kunath, Peter
80999 München (DE)**

(74) Representative: **Bertsch, Florian Oliver et al
Kraus & Weisert
Patent- und Rechtsanwälte
Thomas-Wimmer-Ring 15
80539 München (DE)**

(54) **Method for providing a traffic pattern for navigation map data and navigation map data**

(57)     The present invention relates to a method for providing a traffic pattern for a road segment of navigation map data on the basis of time series traffic data Y(t), the method comprising the following steps:
- determining reference time series $\rho(t)$ for said road segment used to approximate said time series traffic data Y(t),
- approximating said time series traffic data Y(t) by a weighted combination of said reference time series $\rho(t)$, wherein the reference time series are weighted using weighting coefficients $\alpha$ determining how much a predetermined reference time series $\rho(t)$ contributes to the combination of said reference time series for approximating the time series traffic data Y(t),
- linking the determined weighting coefficients $\alpha$ to said road segment of the navigation map data.

FIG. 1

**Description**

This invention relates to a method for providing a traffic pattern for a road segment of navigation map data on the basis of time series traffic data, to a system for providing traffic patterns, navigation map data and the navigation unit determining a route to a predetermined destination.

Background of the Invention

In the art traffic detection systems are known which monitor the velocities of vehicles for the road segment on which sensors are provided detecting the velocity of the vehicles driving past. These sensors provide for each road segment raw traffic patterns comprising a large amount of data because many road segments are usually monitored by the sensors. Thus, a huge amount of independent measurements are generated building time series traffic data. In view of the large amount of data it is hardly possible to use these time series traffic data in the context of navigation systems, as not enough storage space is provided to store the complete time series traffic data for each road segment.

Summary

Accordingly, a need exists to provide a possibility to use traffic patterns provided on the basis of time series traffic data needing little storage space for a navigation system.

This need is met by the features of the independent claims. In the dependent claims preferred embodiments of the invention are described.

According to a first aspect of the invention a method is provided providing a traffic pattern for a road segment of navigation map data on the basis of time series traffic data Y(t). According to one step of the method reference time series p(t) are determined for said road segment used to approximate said time series traffic data Y(t). In an additional step the time series traffic data Y(t) are approximated by a weighted combination of said reference time series p(t), wherein the different time series are weighted using weighting coefficients $\alpha$ determining how much a predetermined reference time series p(t) contributes to the combination of said reference time series for approximating the time traffic series data Y(t). In an additional step the determined weighting coefficients $\alpha$ are linked to the road segment of the navigation map data. This method allows to provide traffic patterns needing little storage space, the method being based on mathematical models representing an approximation of the original time series traffic data. Instead of storing the complete time series traffic data for a road segment it is enough to store the traffic patterns by storing the weighting coefficients and the reference time series used to approximate the original time series traffic data. The storage space for storing the traffic patterns in such a way only depends on the number of reference time series and on the approximation quality rather than on the length of the original time series traffic data. With the above-described method it becomes possible to reduce the storage space for storing traffic patterns by a factor of 10 or even by a factor of 20 or higher.

Preferably, a number K of reference time series used to approximate the time series traffic data is determined in such a way that a difference between the time series traffic data Y(t) and an approximated traffic data using the weighted reference time series is smaller than a predetermined threshold.

Accordingly, the user generating the reduced traffic pattern can determine the accuracy with which the original time series traffic data should be approximated. The number of reference time series then depends on the desired accuracy. When the number of reference time series is known, the maximum number of weighting coefficients corresponds to the number of reference time series K. It should be understood that not all weighting coefficients $\alpha$ of the reference time series need to be stored in connection with the road segments. It is also possible to only store a smaller number of the weighting coefficients. The user providing the navigation map data with the approximated traffic pattern will determine the number of coefficients depending on the storage space and capacities and depending on the accuracy needed.

In one embodiment of the invention the reference time series p(t) are determined by determining a limited number of representatives of the time series traffic data of the map data. For example, it is possible to extract some representative time series traffic data from the time series traffic data of a predetermined geographical region, such as a city. These representatives allow to describe the time series traffic data of the other road segments of said geographical region by a linear combination using the representatives. The representatives may be time series traffic data of a larger road, such as an arterial road or a radial highway in an urban agglomeration. When lots of traffic is detected on such important roads, it can be deduced that the vehicle passing on these roads can probably be detected later on other roads connected to said representative roads. The representatives of the time series traffic data can be determined by mathematical methods, such as clustering analysis, e.g. partitioning clustering, model-based clustering, density-based clustering or agglomerative clustering. By way of example clustering algorithms, such as PAM (Partitioning Around Medoids) or CLARANS might be used. However, it is also possible to use methods such as OPTICS together with an additional selection of the representatives. Furthermore, the k-means method is also possible, however, with the latter example the representatives are artificial representatives and are not selected from the actually measured time series traffic data. When the representatives are used as reference time series, the weighting coefficients for these representatives can be determined by a linear regression method in which the approximated time series traffic data for a road segment are compared to the time series traffic data of said road segment. By way of example a least square fitting can be used to determine the coefficients.

Mathematically the time series traffic data may be approximated using the following equation

$$Y(t) \approx \sum_{n=1}^{k} \alpha_n \rho_n(t) \qquad (1)$$

As can be seen from equation (1), the time series traffic data $Y(t)$ are approximated using a linear combination of the reference time series $\rho(t)$, each reference time series being weighted by the weighting coefficients $\alpha_n$. The resulting approximated time series traffic data $Y_{approx}(t)$ are similar to the original time series traffic data. Instead of using the original time series traffic data having a plurality of data points, e.g. 30-100 data points describing the mean velocity for 24 hours on said road segment, the present invention allows to simply use the limited number of weighting coefficients $\alpha_n$ for describing the time series traffic data. When the representatives are used as reference time series, the weighting coefficients can be determined by a linear regression method using a least square fitting. The time series data may also contain the traffic patterns for one week or one month, resulting in a further increase of the data points.

Another possibility to select the reference time series $\rho_n(t)$ is to use standard basis functions, the time series traffic data being described on the basis of said standard basis functions. An example of said standard basis functions can be any trigonometrical function or wavelet functions or any polynomial of grade n. With the use of a standard basis function the step of determining the weighting coefficients comprising at least the step of carrying out a basis transformation in which the time series traffic data are described using said standard basis functions. The inventors have found that when such standard basis functions are used, only a few weighting coefficients are necessary for approximating the original time series traffic data. The higher order coefficients needed to exactly describe the time series traffic data can be omitted. This aspect provides an elegant method of describing the relationship between the time series traffic data and a set of reference time series. The function $Y(t)$ can be described using a set of standard basis functions as a new basis. When the time series traffic data is to be described using said standard basis functions, a basis transformation is necessary, the basis transformation delivering the weighting coefficients in a transformation matrix needed to describe the time series traffic data $Y(t)$ in the selected basis. The weighting coefficients may be determined using at least one of the following methods: the Discrete Fourier Transformation (DFT), the Fast Fourier Transformation (FFT), the Discrete Wavelet Transformation (DWT), the Discrete Cosine Transformation (DCT), or the Single Value Decomposition (SVD). The standard basis functions directly follow from the selection of the method used. In case a Cosine Transformation is used, the standard basis functions are cosine functions. Additionally, it is possible to use Chebychev polynomials. These are only some of the possible standard basis function methods that can be used in the present context. It should be understood that any other transform may be used. The standard basis function will be selected in view of the geometrical form of the time series data. Additionally, it is possible to determine the weighting coefficients using a Piecewise Aggregated Information (PAA) method or an Adaptive Piecewise Constant Approximation (APCA) method in which the time series traffic data is divided in several segments, a mean value for each segment being determined. In case representatives are used as reference time series, these representatives need not to be orthogonal to each other, as it is normally the case for the standard basis functions.

The weighting coefficients which were determined using either the basis transformation and the standard basis functions or several representatives of the time series traffic data may be stored together with the road segment for which the calculation was carried out. The weighting coefficients can either be directly stored together with the road segment to which they belong. However, it is also possible to store the weighting coefficients for each road segment in a separate coefficients table together a position information linking the weighting coefficients to the different road segments.

Furthermore, it is possible to determine the weighting coefficients for the statistical moments of higher order (e.g., variance, skewness, kurtosis). As the time series traffic data describe a mean velocity for said road segment over time, the time series describing variance of traffic data gives a hint to the variation of the velocity of the road segment. When the reconstruction of variance time series is calculated for the velocity variance of a road segment, a measure for the accuracy of velocity can be obtained. The variance values for the different sets of traffic patterns can be regarded as a data set for which weighting coefficients, i.e. variance weighting coefficients, can be determined describing the variance of the different data sets. In addition to the variance determined for the different traffic patterns, it is also possible to additionally calculate the weighting coefficients for the skewness or the kurtosis of the traffic patterns and to store these data together with the weighting coefficients of mean velocity.

When the weighting coefficients and the reference time series have been determined as mentioned above, the weighting coefficients and the reference time series can be transmitted to a storage unit in which the navigation map data are stored. The transmitted weighting coefficients can then be stored together with the road segments. Additionally, the reference time series are also stored in the storage unit, as the reference time series together with the weighting coefficients are needed to calculate the approximated time series traffic data in a navigation application. It should be understood that the weighting coefficients and the reference time series can also be determined in the same system in which the navigation map data are stored to be used by the driver. However, the time series traffic data are often collected in a central data base server, the server unit or any other centralized processing unit determining the reference time series and the weighting coefficients. When the server calculating the reference time series and the weighting coefficients and the map data storage unit are provided in different geographical locations, the weighting coefficients and the corresponding reference time series can be transmitted to the navigation system using e.g. a wireless transmission technology. By way of example said data may be transmitted via a cellular communication network to the vehicle in which the navigation system is provided. A centralized calculation of the reference time series and the weighting coefficients has the advantage that as soon as new time series traffic data are present for a predetermined geographical region, the map data for a plurality of users can be updated more easily. The user does not have to purchase the complete data including map data and updated traffic patterns, but according to one aspect of the invention it is possible to separately update the traffic patterns independent from the navigation map data.

In the following the aspects of the invention relating to the use of the calculated reference time series and the weighting coefficients in the navigation system are discussed, whereas in the foregoing the focus was set on calculation of the reference time series and the weighting coefficients. According to this aspect of the invention, a method for determining a traffic pattern for a road segment is provided in which the weighting coefficients $\alpha$ for that road segment are determined. In an additional step the traffic pattern is reconstructed using the determined weighting coefficients and the reference time series. The approximative reconstruction of the traffic pattern can then be used to determine the travel time to a predetermined destination taking into account the approximated traffic pattern. Preferably, the time series traffic data and therefore the approximated time series traffic data represent the time-dependent mean velocity for a road segment. This mean velocity of the road segment corresponds to a cost factor needed for traveling along said road segment. Normally, the fastest route to a predetermined destination is calculated so that the travel time accumulated when traveling along the different road segments of the determined route is needed. Using the weighting coefficients and the reference time series the best route can be calculated depending on the time of the day.

The approximated traffic pattern can also be used in another application. When the mean velocity is known in dependence of time, it is possible to calculate the route having the lowest energy consumption, as road segments were traffic congestions are to be expected at a high probability can be avoided.

According to another aspect a system for providing a traffic pattern for a road segment is provided comprising means for determining reference time series for said road segment. As mentioned above, the means for determining the reference time series can either calculate representatives of the time series traffic data or can use standard basis functions and a basis transformation. Additionally, means for determining the weighting coefficients are provided used for approximating said time series traffic data by a weighted combination of said reference time series. The reference time series are weighted using said weighting coefficients determining how much a predetermined reference time series contributes to the combination of said reference time series for approximating the time series traffic data. Additionally, storing means are provided for storing the determined weighting coefficients in connection with the road segment.

The invention further provides navigation map data comprising a plurality of road segments, each road segment containing the weighting coefficients as mentioned above. Furthermore, a navigation system is provided according to another aspect of the invention used for determining a route to a predetermined destination, the navigation system comprising map data comprising a plurality of road segments. In these map data each road segment is provided in connection with the weighting coefficients which were calculated as mentioned above. Furthermore, a traffic data approximation means is provided for approximating the mean velocity for the road segment on the basis of the weighting coefficients and on the basis of the reference time series. Last but not least a route determination unit determines a route to the predetermined destination taking into account the mean velocity calculated based on the weighting coefficients and the reference time series. In addition to the weighting coefficients for the mean value, weighting coefficients for the variance, skewness or kurtosis data may be additionally provided.

Brief Description of the Drawings

The invention will be explained in further detail with reference to the accompanying drawings, in which

Fig. 1 is a schematic view of a system calculating the weighting coefficients and the weighting time series and a navigation system using the calculated values,

Fig. 2 shows how an original time series data can be approximated by reference time series,

Fig. 3 shows a flowchart comprising the main steps for determining the weighting coefficients,

Fig. 4 shows a flowchart comprising the main step for calculating a route using the determined coefficients, and

Fig. 5 shows schematically a graph representing a typical traffic pattern as time series traffic data.

Detailed Description of Preferred Embodiments

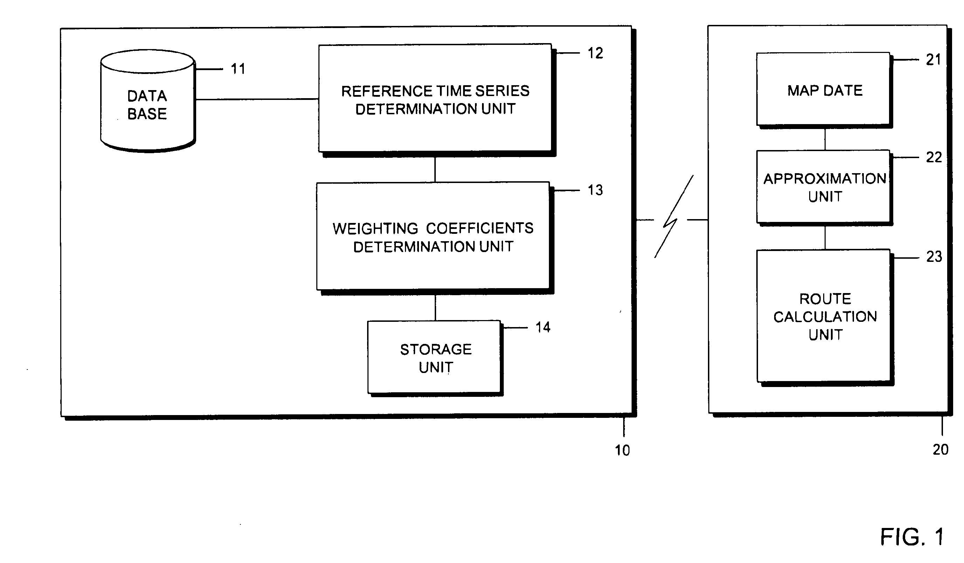

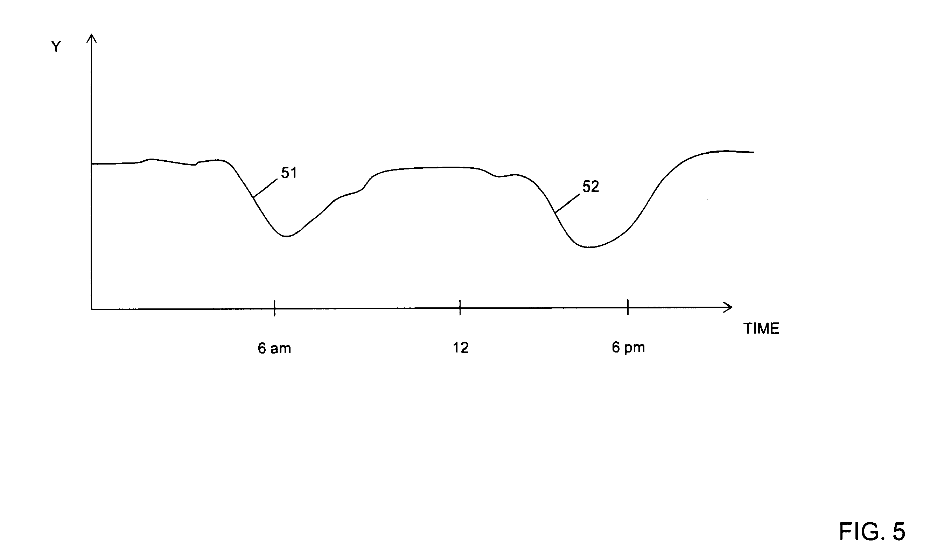

In Fig. 1 a system is show allowing a compression or transformation of originally detected time series traffic data, so that they can be used in connection with a navigation system. The system shown in Fig. 1 comprises a traffic pattern providing system 10 and a navigation system 20. The system shown in Fig. 1 can be incorporated into one unit carrying out the determination of the weighting coefficients and of the reference time series and the application of the calculated data in a navigation system. However, the system 10 and the system 20 can also be located in different geographical regions, the navigation system being incorporated into a moving vehicle, whereas the system 10 may be a fixedly installed unit determining the weighing coefficients and the reference time series for a plurality of users. The system 10 comprises a database 11 comprising the time series traffic data $Y(t)$. The time series traffic data, an example of which is shown in Fig. 5, comprise the mean velocity for a certain road segment depending on time. As navigation map data for vehicle navigation normally comprise map data for a large geographical region, such as an entire country or an entire continent, the amount of time series traffic data can be quite huge. Even though traffic patterns might not exist for all road segments of the map data, the traffic pattern might exist for some important road segments of the map data. A typical velocity distribution over time for a road segment is shown in Fig. 5. The road segment shown may be a road segment located in an urban agglomeration. During night time until five or six a.m. in the morning the average velocity of the detected vehicles is constantly high, the absolute value depending on the velocity allowed on said road segment. Due to the commuter traffic in the morning from people going to work the mean velocity for said road segment may decrease as shown by the first recess 51 shown in Fig. 5. After the first traffic congestions in the morning, the mean velocity may again rise to a region of a more or less stable plateau in which the mean velocity may be lower than the velocity during the night. In the afternoon around six p.m. a second recess in the mean velocity can be detected resulting from the commuter traffic from people returning from work. After said recess 52, the mean velocity again increases until reaching said constant level during night time. It should be understood that the traffic pattern shown in Fig. 5 may have a completely different look depending where the road segment is located in the map data. When a mean velocity is detected every quarter of an hour, half an hour or every hour, 96, 48 or 24 values are contained in the time series traffic data shown in Fig. 5, respectively. For a better temporal resolution even more velocity values may be needed resulting in a further increase of data.

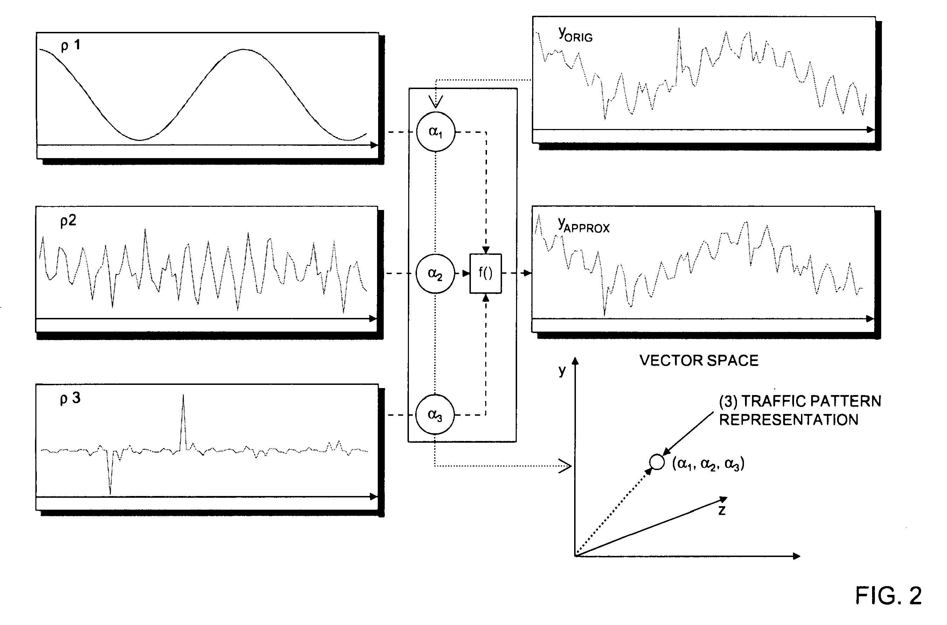

The velocity distribution, as is shown in Fig. 5, can now be described using reference time series which are determined in the reference time series determination unit 12 shown in Fig. 1. The reference time series can either be determined using some representatives of the time series traffic data. The representatives can be calculated using clustering algorithms in which the time series are compared to each other in order to determine the similarities of the time series. The similarity may be determined using a similarity measure for time series, e.g. the Lp-distance, e.g. Euclidean distance, or the edit distance, e.g. dynamic time warping (DTW), edit distance with real penalty (ERP), edit distance on real sequences (EDR), or longest common subsequence (LCSS). In such a way the dependencies between different time series traffic data can be determined and a basic set of reference time series, i.e. the representatives, can be determined with which all the other time series traffic data can be calculated. The idea is to represent each time series by an adequate combination of a set of specific reference time series. The similarity distance used for clustering may be computed by applying the parameters, i.e. the weighting coefficients that specify the combination. In connection with Fig. 2 said approach is illustrated. A set of reference time series marked as $\rho_1$, $\rho_2$ and $\rho_3$ is used to approximate an original time series $Y_{orig}$ by an arbitrary complex combination $Y_{approx}$. In the embodiment shown in Fig. 2 this is a combination of the coefficients of $\alpha 1$, $\alpha 2$ and $\alpha 3$ representing three reference time series. In the embodiment shown the approximated time series representing the approximated time series traffic data can be approximated by the following equation:

$$Y_{approx} = \alpha_1 \cdot \rho_1 + \alpha_2 \cdot \rho_2 + \alpha_3 \cdot \rho_3 \qquad (2)$$

As can be seen from the right part of Fig. 2 the approximated time series $Y_{approx}$ is similar to the original time signal $Y_{orig}$.

In case very large data sets are used in database 11, the clustering methods mentioned above can also be applied to the weighting coefficients and not to the original time series traffic data in order to minimize the computing power needed to calculate the representatives. The resulting representation consists of some low-dimensional feature vector that can be easily indexed by means of any spatial index structure. As a consequence, the cost for the clustering process depends only on the number of reference time series rather than on the length of the time series. For clustering the approximation is represented by a feature vector of the coefficients of the combination, the feature vector being represented by $(\alpha_1, \alpha_2, \alpha_3)$.

Returning to Fig. 1, the reference time series are determined in the determination unit 12, whereas the weighting coefficients $\alpha_1$, $\alpha_2$, and $\alpha_3$ can be calculated in the weighting coefficients determination unit 13. During the approximation process the weighting coefficients $\alpha$ are the quantities that are estimated. Once the reference time series $\rho_1$-$\rho_K$ are determined, k being the number of representatives, the corresponding weighting parameters $\alpha_1$-$\alpha_k$ can be calculated by finding the best fitting solution. This problem is a minimization process in which the suitable weighting parameters $\alpha$ are calculated. One possibility for such a linear regression approach is a least square estimation fitting. In the following an example is shown. By way of example a complex time series traffic data Y(t) should be approximated using a mathematical model with four reference time series $\rho_1$, $\rho_2$, $\rho_3$ and $\rho_4$. Thus, the mathematical model describing Y(t) consists of the set of reference time series $\rho_1$-$\rho_4$ and the function $f(p, \alpha) = \alpha_1 \cdot \rho_1 + \alpha_2 \cdot \rho_2 + \alpha_3 \cdot \rho_3 + \alpha_4 \cdot \rho_4$. The weighting coefficients $\alpha_1$-$\alpha_4$ are used to approximate the complicated time series traffic data Y(t). As can be seen from the above said, this approximation provides an elegant method of describing the relationship between the time series traffic data and a set of reference time series. In general, it can use any complex mathematical function, such as a combination of quadratic or logarithmical functions, to approximate the relationship. A small set of model parameters, here the reference time series, are used to model all time series traffic data, the reference time series being identical for all time series traffic data in the database 11. The size of the representation, i.e. the number of reference time series is independent of the length of the time series in the underlying database. In particular, the approximation exactness of the model-based representation only depends on the applied model function and the reference time series. Once the reference time series $\rho_1$-$\rho_K$ have been determined and the corresponding weighting coefficients $\alpha_1$-$\alpha_4$ for each road segments, the weighting coefficients can be stored in a storage unit 14. The storage unit can be organized in such a way that the weighting coefficients are directly attached to the road segment to which they refer, or the weighting coefficients are stored separately, a position link being provided allowing to determine to which road segment the stored weighting coefficients belong to. In addition, the reference time series determined in unit 12 should also be stored in the storage unit 14 as they will be needed in the navigation system for later on approximating the traffic patterns of the database 11. In general, the reference time series should have a high correlation to a subset of the remaining time series in the database. As a consequence, the following procedure is proposed to derive a set of reference time series. It is assumed that K reference time series should be selected by simply clustering the time series using a K medoid clustering method, e.g. PAM. Another clustering algorithm may be CLARANS or OPTICS. The clustering algorithm yields a set of k cluster medoids (time series), each representing its corresponding cluster. All time series of a cluster are strongly correlated to the corresponding cluster medoid. Obviously, taking these medoids for the derivation of the reference time series is a very good choice. In order to avoid wasting too much computational costs it is proposed to perform the clustering algorithm only on a small sample of the database. A sample rate of about one to ten percent of the data comprised in the database 11 is shown to be sufficient for a high clustering accuracy.

Another possibility to determine the reference time series is to select standard basis functions, such as cosine or sine functions or wavelets. The selection of the standard basis functions mainly depends on the form of the time series traffic data shown in Fig. 5. If the time series traffic data comprise sharp changes in the mean velocity, the use of wavelets may be preferred, whereas for other cases the use of trigonometric functions may be preferred to approximate time series traffic data as shown in Fig. 5. These standard basis functions form the basis used to describe the original time series traffic data $Y_{orig}$. By a simply basis transformation the coefficients $\alpha_1$-$\alpha_k$ can be determined which describe the original time series traffic data on a basis based on the basis function $\rho$. As known from standard mathematical procedures a transformation matrix can be calculated giving the weighting coefficients $\alpha$. It has been found that only a few coefficients $\alpha_1$-$\alpha_k$ are needed to approximate the original time series traffic data $Y_{orig}$. The result is a low-dimensional feature vector which can be stored in connection with the road segment for which it was calculated.

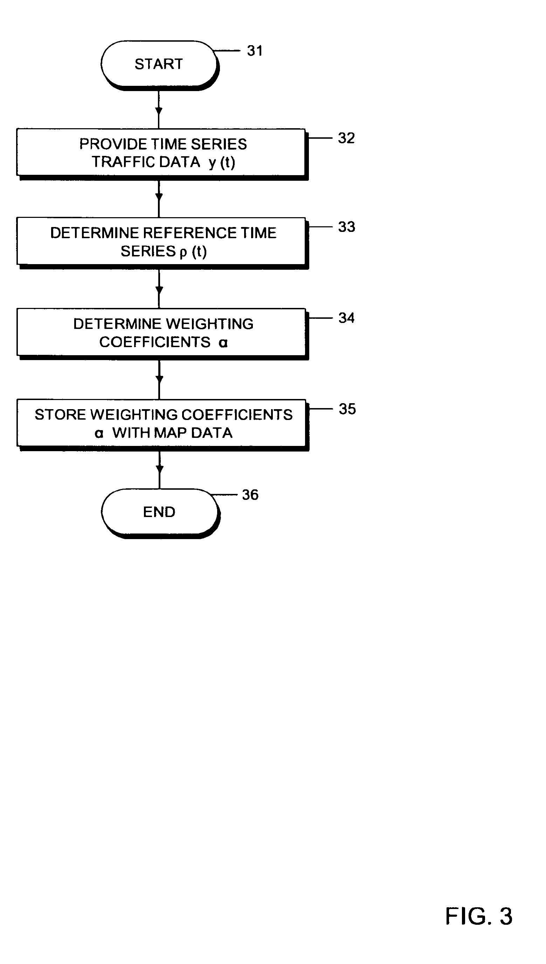

In Fig. 3 the steps needed to allow a space-efficient mathematical representation of a time series traffic data is summarized. After the start of the method in step 31 the time series traffic data stored in database 11 need to be provided (step 32). These original time series traffic data are then used to determine the reference time series p(t) as shown in step 33, these reference time series either being the representatives of the time series traffic data or being described by another basis, such as standard basis functions. Once the reference time series are known, the weighting coefficients needed to weight the different reference time series can be calculated in step 34. In step 35 the weighting coefficients can be stored in connection with the map data, so that at the end in step 36 map data are provided containing time-dependent traffic patterns which are stored by simply connecting weighting coefficients to the different road segments.

Referring back to Fig. 1 the data calculated in the system 10 can be used in a navigation system as shown by the navigation system 20. The navigation system comprises map data allowing a user to be guided from the present location to a predetermined destination. The navigation system and an approximation unit 22 may be provided approximating the original time series traffic data $Y_{orig}$ by $Y_{approx} = Y(t) \approx \sum_{n=1}^{k} \alpha_n \rho_n(t)$. In the navigation system it is necessary to reconstruct the time-dependent velocities in order to know, depending on the time of the day, which route should be used to arrive at a predetermined destination. The approximation unit furthermore needs the reference time series which were determined in unit 12 in order to calculate the approximated time series traffic data. A route calculation unit 23 calculates the route on the basis of the data calculated by the approximation unit 22.

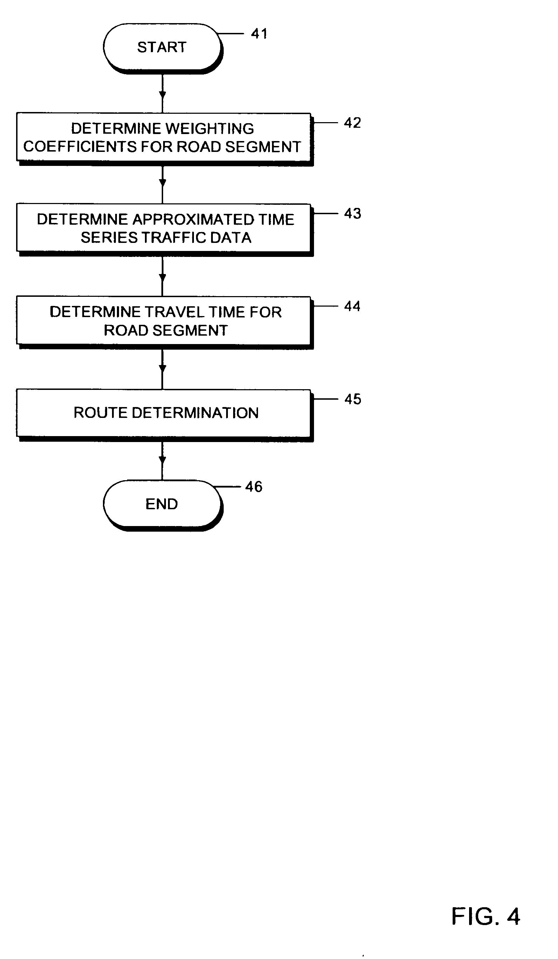

In Fig. 4 the main steps carried out in the navigation system 10 are summarized. The method starts in step 41, whereas in step 42 the weighting coefficients for a road segment or for a plurality of road segments are determined. One possibility to determine the weighting coefficients is to simply load or extract them from the map data. When the reference time series are known, it is possible in step 43 to determine the approximated time series traffic data $Y_{approx}$. This approximated traffic pattern can be used in step 44 to determine the travel time for the different road segments. This travel time forms the basis for the route destination in step 45 in which the final route is calculated. The method ends in step 46.

Summarizing, the present invention describes a method in which, based on a few weighting parameters and based on a set of reference time series the time series traffic data can be modeled. The advantage is that storage space is saved in the navigation system, as the original time series traffic data are transformed into data/approximations having a small memory footprint.

**Claims**

1. A method for providing a traffic pattern for a road segment of navigation map data on the basis of time series traffic data Y(t), the method comprising the following steps:

   - determining reference time series p(t) for said road segment used to approximate said time series traffic data Y(t),
   - approximating said time series traffic data Y(t) by a weighted combination of said reference time series p(t), wherein the reference time series are weighted using weighting coefficients $\alpha$ determining how much a predetermined reference time series p(t) contributes to the combination of said reference time series for approximating the time series traffic data Y(t),
   - linking the determined weighting coefficients $\alpha$ to said road segment of the navigation map data.

2. The method according to claim 1, further comprising the step of determining the number of weighting coefficients used for approximating the time series traffic data using said reference time series p(t).

3. The method according to claim 1 or 2, wherein the reference time series p(t) are determined by determining a limited number of representatives of the time series traffic data of the map data.

4. The method according to any of the preceding claims, wherein the representatives are determined using a clustering method.

5. The method according to claim 3 or 4, wherein the weighting coefficients for the representatives are determined by a linear regression method in which the approximated time series traffic data for said road segment are compared to the time series traffic data of said road segment.

6. The method according to claim 1 or 2, wherein the reference time series are determined using standard basis functions, the time series traffic data being described on the basis of said standard basis functions, wherein the step of determining the weighting coefficients comprises at least the step of carrying out a basis transformation in which the time series traffic data are described using the standard basis functions.

7. The method according to claim 6, wherein weighting coefficients for the standard basis functions are determined using at least one of the following methods:

- Discrete Fourier Transformation (DFT),
- Fast Fourier Transformation (FFT),
- Discrete Wavelet Transformation (DWT),
- Discrete Cosine Transformation (DCT),
- Single Value decomposition (SVD)
- Chebychev Polynomials,

wherein the standard basis functions are given when using one of the methods listed above.

8. The method according to claim 6, wherein the weighting coefficients $\alpha$ are determined using at least one of the following methods:

- Piecewise Aggregated Information (PAA),
- Adaptive Piecewise Constant Approximation (APCA).

9. The method according to any of the preceding claims, further comprising the step of determining the variance of the weighting coefficients $\alpha$.

10. The method according to any of the preceding claims, further comprising the step of determining the number K of reference time series used to approximate the time series traffic data in such a way, that a difference between the time series traffic data and approximated traffic data using the weighted reference time series is smaller than a predetermined threshold.

11. The method according to any of the preceding claims, wherein the navigation map data comprise a plurality of road segments, the weighting coefficients $\alpha$ for each road segment being stored together with the road segment.

12. The method according to any of claims 1 to 10, wherein the navigation map data comprise a plurality of road segments, the weighting coefficients for each road segment being stored in a coefficient table together with a position information linking the weighting coefficients to one road segment.

13. The method according to any of the preceding claims, wherein the time series traffic data for said road segment contain the time-dependent mean velocities for said road segment.

14. The method according to any of the preceding claims, further comprising the step of

- transmitting the weighting coefficients $\alpha$ and the reference time series p(t) for said road segment to a storage unit (14) where the navigation map data are stored,
- storing the weighting coefficients together with said road segment, and
- storing the reference time series p(t).

15. A method for determining a traffic pattern for a road segment of navigation map data on the basis of time series traffic data Y(t), the method comprising the following steps:

- determining weighting coefficients $\alpha$ for said road segment, the weighting coefficients $\alpha$ being used to approximate said time series traffic data Y (t) of said road segment by a weighted combination of reference time series p(t),

wherein the reference time series are weighted using the weighting coefficients $\alpha$ determining how much a predetermined reference time series p(t) contributes to the combination of said reference time series for approximating the time series traffic data Y(t), and

- approximating the traffic pattern using the determined weighting coefficients $\alpha$.

16. The method according to claim 15, wherein the time series traffic data Y(t) represent a time dependent mean velocity of said road segment.

**17.** The method according to claim 15 or 16, wherein a fastest route to a predetermined destination is calculated taking into account the approximated traffic pattern.

**18.** The method according to any of claims 15 to 17, wherein a route having the lowest energy consumption is calculated on the basis of the approximated traffic pattern.

**19.** The method according to any of the preceding claims, further comprising the steps of determining the variance, the skewness, or the kurtosis for the time series traffic data.

**20.** A System for providing a traffic pattern for a road segment on the basis of time series traffic data, comprising:

- means for determining reference time series (12) for said road segment,
- means for determining weighting coefficients (13) for said road segment used for approximating said time series traffic data by a weighted combination of said reference time series $p(t)$, wherein the reference time series are weighted using weighting coefficients $\alpha$ determining how much a predetermined reference time series $p(t)$ contributes to the combination of said reference time series for approximating the time series traffic data $Y(t)$, and
- storing means (14) for storing the determined weighting coefficients in connection with the road segment.

**21.** Navigation map data comprising a plurality of road segments, each road segment being provided in connection with weighting coefficients $\alpha$, the weighting coefficients $\alpha$ being used for approximating time series traffic data by a weighted combination of reference time series $p(t)$, wherein the reference time series are weighted using said weighting coefficients $\alpha$ determining how much a predetermined reference time series $p(t)$ contributes to the combination of said reference time series for approximating the time series traffic data $Y(t)$.

**22.** Navigation system for determining a route to a predetermined destination comprising:

- map data (21) comprising a plurality of road segments, each road segment being provided in connection with weighting coefficients $\alpha(n)$, the weighting coefficients $\alpha(n)$ being used for approximating time series traffic data by a weighted combination of reference time series $p(t)$, wherein the reference time series are weighted using said weighting coefficients $\alpha$ determining how much a predetermined reference time series $p(t)$ contributes to the combination of said reference time series for approximating the time series traffic data $Y(t)$,
- traffic data approximation means (22) for approximating the mean velocity for the road segments on the basis of the weighting coefficients, and
- route determination means (23) determining a route to a predetermined destination using the mean velocity calculated based on the weighting coefficients.

FIG. 1

FIG. 2

START — 31

PROVIDE TIME SERIES TRAFFIC DATA y (t) — 32

DETERMINE REFERENCE TIME SERIES ρ (t) — 33

DETERMINE WEIGHTING COEFFICIENTS α — 34

STORE WEIGHTING COEFFICIENTS α WITH MAP DATA — 35

END — 36

FIG. 3

FIG. 4

FIG. 5

Europäisches
Patentamt

European
Patent Office

Office européen
des brevets

**EUROPEAN SEARCH REPORT**

Application Number

EP 08 00 5151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/064234 A1 (KUMAGAI MASATOSHI [JP] ET AL) 23 March 2006 (2006-03-23) * paragraphs [0033], [0039], [0042], [0043]; claim 1 * | 1-22 | INV. G08G1/01 G08G1/0967 G01C21/34 G09B29/10 |
| X | KIM, KIM, OH, SON: "Traffic flow forecasting based on pattern recognition to overcome memoryless property" INTERNATIONAL CONFERENCE ON MULTIMEDIA AND UBIQUITOUS ENGINEERING, 2007, 28 April 2007 (2007-04-28), pages 1181-1186, XP002499404 MUE * the whole document * | 1-22 | |
| X | US 2008/033630 A1 (LEE EUN-MI [KR] ET AL) 7 February 2008 (2008-02-07) * paragraphs [0020], [0028]; claim 1 * | 1,15, 20-22 | |

TECHNICAL FIELDS
SEARCHED (IPC)

G08G
G01C
G09B

The present search report has been drawn up for all claims

| Place of search | Date of completion of the search | Examiner |
|---|---|---|
| The Hague | 14 October 2008 | Hunt, Joke |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 00 5151

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2008

| Patent document cited in search report | | Publication date | Patent family member(s) | Publication date |
|---|---|---|---|---|
| US 2006064234 | A1 | 23-03-2006 | JP 2006085511 A | 30-03-2006 |
| US 2008033630 | A1 | 07-02-2008 | NONE | |

EPO FORM P0459

For more details about this annex : see Official Journal of the European Patent Office, No. 12/82